# EUROPEAN PATENT APPLICATION

(11) **EP 4 768 103 A1**
(43) Date of publication of application: **01.07.2026**
(21) Application number: 25163654.4
(22) Date of filing: 13.03.2025
(51) Int. Cl.: A63F 13/22, A63F 13/218, A63F 13/24

(54) **DOUBLE-BODY TRIGGER KEYSWITCH STRUCTURE AND GAMEPAD**

(30) Priority: 31.12.2024 CN 202411992957
(71) Applicant: Shenzhen Qixiong Technology Co., Ltd, 518000 Shenzhen City Guangdong (CN)
(72) Inventor: HU, Xiaochen, Shenzhen, 518000 (CN); SHI, Yu, Shenzhen, 518000 (CN)
(74) Representative: Monteiro Alves, Inês

(57) **Abstract**

Disclosed are a double-body trigger keyswitch structure (100) and a gamepad (1000). The double-body trigger keyswitch structure (100) includes: a seat body (10); a movable member (20) movably mounted at the seat body (10) and provided with a first state and a second state that are movably switched, and the movable member (20) being provided with a magnetic portion (21); a magnetic positioning member (30) relatively fixed to the seat body (10), a magnetic force of the magnetic positioning member (30) acting on the magnetic portion (21) to limit the movable member (20) to the first state or the second state; a trigger key (40) mounted at the seat body (10) and provided with a digital trigger portion (41) and an analog trigger portion (42); a digital switch (50) and an analog switch (60) both configured to be electrically connected to the main control board (20), and at least one of the digital switch (50) and the analog switch (60) being mounted at the movable member.

## Description

### TECHNICAL FIELD

The present application relates to the technical field of input device, and in particular to a double-body trigger keyswitch structure and a gamepad.

### BACKGROUND

The trigger keyswitch structure of most gamepads on the market adopts digital switches or analog switches, and generates digital signals or analog signals when triggered. Generally, gamepads using digital switches are suitable for gun battles and fighting games, and trigger shooting or character actions through digital signals. While gamepads using analog switches are suitable for racing games, and analog signals match character actions such as refueling and braking.

In the related art, some gamepads adopt a double-body trigger keyswitch structure, which has two switchable input signal triggering modes. Users can switch the trigger input signal triggering mode to match different types of games. Specifically, a seat body and a movable member movably mounted at the seat body are provided in the double-body trigger keyswitch structure, and a digital switch or an analog switch is mounted at the movable member. After the user adjusts the position state of the movable member, the trigger keyswitch can only trigger a corresponding switch.

However, the seat body in this type of dual-body trigger keyswitch structure mostly uses two spaced elastic clamps to clamp the movable member, so as to position the movable member in a certain state. This type of structure will wear out after the user switches it frequently, which reduces the positioning effect of the movable member, resulting in the situation that the movable member fails to be clamped in place, affecting the user experience.

### SUMMARY

The main objective of the present application is to provide a double-body trigger keyswitch structure and a gamepad, which aims to improve the positioning reliability of the movable member.

In order to achieve the above objective, the present application provides a double-body trigger keyswitch structure, applied to a gamepad, the gamepad including a main control board, the double-body trigger keyswitch structure includes:
a seat body;
a movable member movably mounted at the seat body and provided with a first state and a second state that are movably switched, the movable member is provided with a magnetic portion;
a magnetic positioning member relatively fixed to the seat body, a magnetic force of the magnetic positioning member acting on the magnetic portion to limit the movable member to the first state or the second state;
a trigger key mounted at the seat body and provided with a digital trigger portion and an analog trigger portion;
a digital switch and an analog switch both configured to be electrically connected to the main control board, at least one of the digital switch and the analog switch is mounted at the movable member; and
when the movable member is in the first state and the trigger key is pulled, the digital trigger portion triggers the digital switch, and when the movable member is in the second state and the trigger key is pulled, the analog trigger portion triggers the analog switch.

In an embodiment, the movable member is slidably mounted at the seat body, and the movable member is located at two extreme positions in a sliding direction of the movable member itself in the first state and the second state respectively; and
the magnetic positioning member is located in a middle of the two extreme positions of the magnetic portion, and is arranged to repel each other with the same polarity as the magnetic positioning member.

In an embodiment, the movable member includes a sliding plate, the sliding plate is provided with a sliding hole, the seat body is slidably connected to the sliding hole, and the magnetic portion is connected to the sliding plate and is located at a side perpendicular to the extension direction of the sliding hole.

In an embodiment, the sliding plate includes a plate body and a mounting frame, the plate body is provided with the sliding hole, the mounting frame is connected to an edge side of the plate body in the width direction of the sliding hole, and the magnetic portion is mounted at the mounting frame; and
the plate body is aligned with an edge side of the seat body close to the mounting frame, and the mounting frame partially extends to the edge side of the seat body.

In an embodiment, the double-body trigger keyswitch structure further includes a limit screw, the seat body is provided with an internal thread column on a face facing the movable member, and the internal thread column is slidably matched with the sliding hole; and
the limit screw includes a connected head and a rod, and the rod is threadedly connected to the internal thread column, so that the movable member is limited between the head and the seat body.

In an embodiment, the movable member includes a plate body and an assembly sleeve, the assembly sleeve is integrally formed and connected to a middle of the plate body, and the sliding hole is formed inside the assembly sleeve.

In an embodiment, the trigger keyswitch is provided with an outer side surface and an inner side surface, the digital trigger portion and the analog trigger portion are both arranged at an interval on the inner side surface, the digital switch is mounted at a side of the movable member away from the magnetic portion and is aligned with the digital trigger portion, and the analog trigger portion is located at a side of the digital trigger portion away from the magnetic portion.

The present application also provides a gamepad, including a housing, a main control board and the double-body trigger keyswitch structure as above, wherein:
the housing is provided with an installation cavity, a cavity wall of the installation cavity is provided with a key hole, and the main control board is mounted at the installation cavity; and
the seat body is connected to the main control board, the trigger keyswitch is exposed outside the key hole, the magnetic positioning member is mounted at the main control board, and the digital switch and the analog switch are both electrically connected to the main control board.

In an embodiment, the digital switch is mounted at the movable member, the analog switch is integrated in the main control board, the housing is further provided with an adjustment hole, the movable member is provided with an adjustment rod, and the adjustment rod extends out of the adjustment hole and is movably matched with the adjustment hole.

In an embodiment, the gamepad is provided with two double-body trigger keyswitch structures, the main control board is provided with a mounting seat, the mounting seat is arranged between the two seat bodies, and the two magnetic positioning members are respectively mounted at opposite sides of the mounting seat and are arranged at an interval from the corresponding magnetic portions

Through the above scheme, the present application can stabilize the movable member in the first state or the second state due to the repulsive force or attractive force of the magnetic positioning member on the magnetic portion. When the user needs to switch the input signal type, the state of the movable member can be adjusted. During the adjustment process, it is necessary to first overcome the resistance of the magnetic positioning member acting on the magnetic portion to make the movable member leave the current state, and then under the magnetic force of the magnetic positioning member, the movable member is limited to another state. The movable member is stabilized in a certain state under the magnetic force of the magnetic positioning member, and the reliability is high. In the switching process, the movable member and the magnetic positioning member do not need to contact each other, thereby avoiding high-frequency wear of the two and extending the service life. In addition, the force feedback effect is good during the switching process, so that the user can clearly feel whether the switching action is effective, and the user has a better experience.

### BRIEF DESCRIPTION OF THE DRAWINGS

In order to illustrate the technical solutions in the embodiments of the present application or in the related art more clearly, the following briefly introduces the accompanying drawings required for the description of the embodiments or the related art. Obviously, the drawings in the following description are only part of embodiments of the present application. For those skilled in the art, other drawings can also be obtained according to the structures shown in these drawings without any creative effort.
FIG. 1 is a schematic structure diagram of a gamepad according to an embodiment of the present application at one viewing angle.
FIG. 2 is a schematic structure diagram of a gamepad according to an embodiment of the present application at another viewing angle.
FIG. 3 is a disassembled view of a gamepad according to an embodiment of the present application.
FIG. 4 is a disassembled view of a double-body trigger keyswitch structure according to an embodiment of the present application.
FIG. 5 is a schematic structure diagram of a movable member in a double-body trigger keyswitch structure according to an embodiment of the present application.
FIG. 6 is a schematic diagram of a partial structure in a double-body trigger keyswitch structure according to an embodiment of the present application.
FIG. 7 is a schematic diagram of a mounting seat in a double-body trigger keyswitch structure according to an embodiment of the present application.

### Description of reference signs:

100. double-body trigger keyswitch structure; 10. seat body; 11. internal thread column; 12. slide groove;
20. movable member;21. magnetic portion; 22. sliding plate; 221. sliding hole; 222. plate body; 2221. limiting column; 223. mounting frame; 23. assembly sleeve; 24. adjustment rod;
30. magnetic positioning member;
40. trigger key; 41. digital trigger portion; 42. analog trigger portion; 421. arm body; 43. face shell; 431. articulating lug; 432. axle hole; 44. back shell; 45. rotating shaft; 46. torsion spring;
50. digital switch; 51. micro switch; 52. interface board;
60. analog switch;
70. limit screw; 71. head; 72. rod;
1000. gamepad;
200. housing; 201. front shell; 202. posterior shell; 210. installation cavity; 220. key hole; 230. adjustment hole;
300. main control board; 310. mounting seat; 3101. assembly groove; 3102. positioning column.

The realization of the objective, functional characteristics, and advantages of the present application are further described with reference to the accompanying drawings.

### DETAILED DESCRIPTION OF THE EMBODIMENTS

The technical solutions of the embodiments of the present application will be described in more detail below with reference to the accompanying drawings. It is obvious that the embodiments to be described are only some rather than all of the embodiments of the present application. All other embodiments obtained by persons skilled in the art based on the embodiments of the present application without creative efforts shall fall within the scope of the present application.

It should be noted that if there are directional indications, such as up, down, left, right, front, back, etc., involved in the embodiments of the present application, the directional indications are only used to explain a certain posture as shown in the accompanying drawings. If the specific posture changes, the directional indication also changes accordingly.

In addition, if there are descriptions related to "first", "second", etc. in the embodiments of the present application, the descriptions of "first", "second", etc. are only for the purpose of description, and should not be construed as indicating or implying relative importance or implicitly indicates the number of technical features indicated. Thus, a feature delimited with "first", "second" may expressly or implicitly include at least one of that feature. Besides, the meaning of "and/or" appearing in the application includes three parallel scenarios. For example, "A and/or B" includes only A, or only B, or both A and B. In addition, the technical solutions between the various embodiments can be combined with each other, but must be based on the realization by those skilled in the art. When the combination of technical solutions is contradictory or cannot be realized, it should be considered that the combination of such technical solutions does not exist or fall within the scope of protection claimed in the present application.

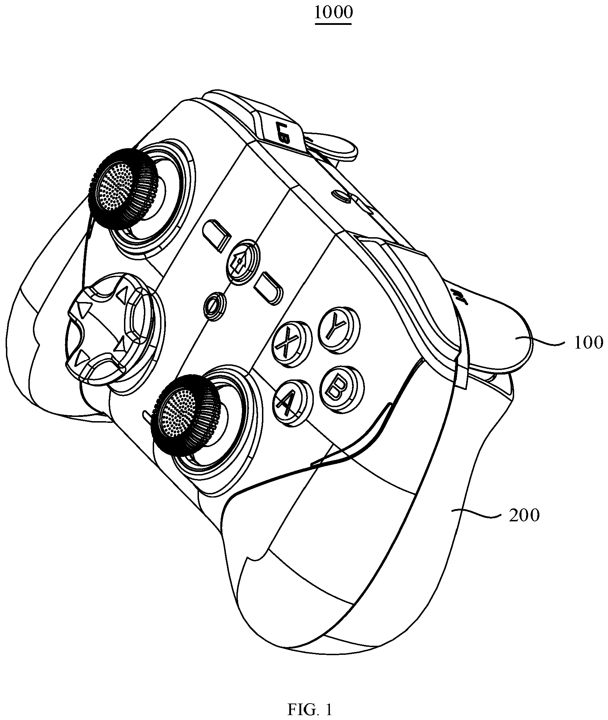

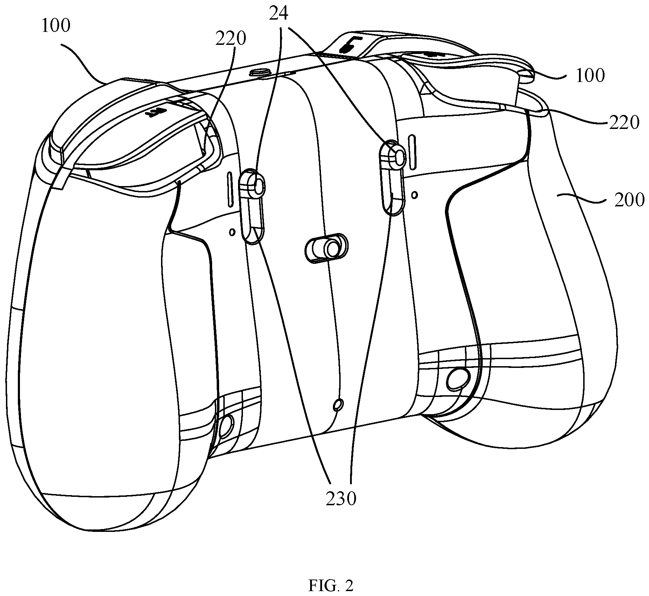

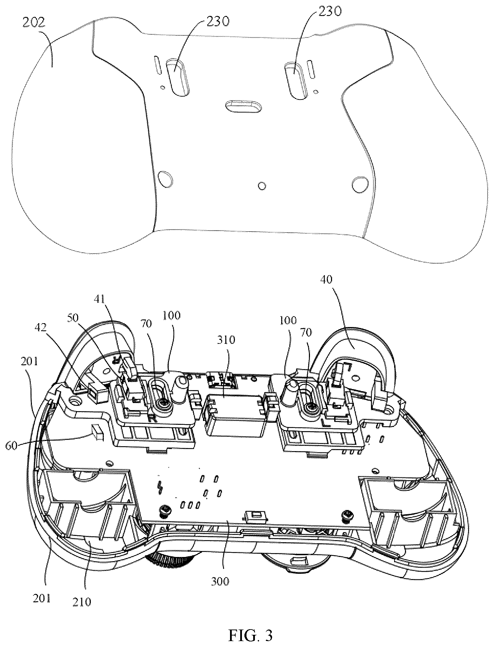

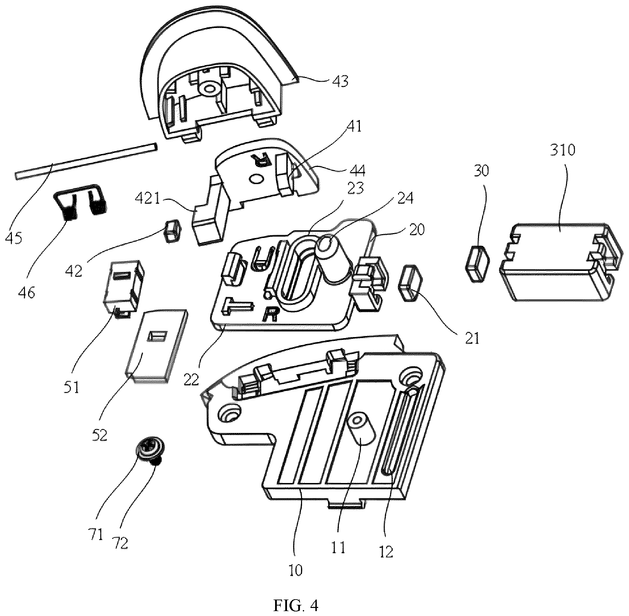

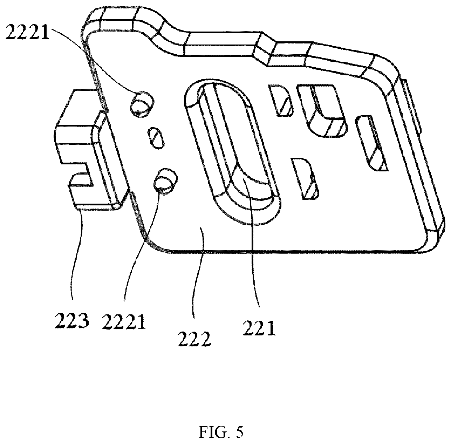

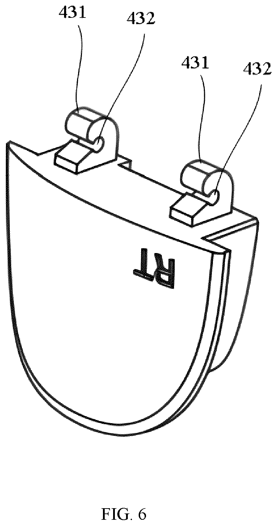

Please refer to FIG. 1 to FIG. 6, the present application provides a double-body trigger keyswitch structure 100, which is applied to a gamepad 1000. The gamepad 1000 includes a main control board 300, and the double-body trigger keyswitch structure 100 includes a seat body 10, a movable member 20, a magnetic positioning member 30, a trigger key 40, a digital switch 50 and an analog switch 60. The movable member 20 is movably mounted at the seat body 10 and is provided with a first state and a second state that are movably switched. The movable member 20 is provided with a magnetic portion 21. The magnetic positioning member 30 is relatively fixed to the seat body 10, and a magnetic force of the magnetic positioning member 30 acts on the magnetic portion 21 to limit the movable member 20 to the first state or the second state. The trigger key 40 is mounted at the seat body 10, and the trigger key 40 is provided with a digital trigger portion 41 and an analog trigger portion 42. The digital switch 50 and the analog switch 60 are both configured to be electrically connected to the main control board 300, and at least one of the digital switch 50 and the analog switch 60 is mounted at the movable member 20. When the movable member 20 is in the first state and the trigger key 40 is pulled, the digital trigger portion 41 triggers the digital switch 50, and when the movable member 20 is in the second state and the trigger key 40 is pulled, the analog trigger portion 42 triggers the analog switch 60.

Through the above scheme, the movable member 20 of the present application can be stabilized in the first state or the second state due to the repulsive force or attractive force of the magnetic portion 21 under the action of the magnetic positioning member 30. When the user needs to switch the input signal type, the state of the movable member 20 can be adjusted. During the adjustment process, it is necessary to first overcome the resistance of the magnetic positioning member 30 acting on the magnetic portion 21 to make the movable member 20 leave the current state, and then under the magnetic force of the magnetic positioning member 30, the movable member 20 is limited to another state. The movable member 20 is stabilized in a certain state under the magnetic force of the magnetic positioning member 30, and the reliability is high. In the switching process, the movable member 20 and the magnetic positioning member 30 do not need to contact each other, thereby avoiding high-frequency wear of the two and extending the service life. In addition, the force feedback effect is good during the switching process, so that the user can clearly feel whether the switching action is effective, and the experience is better.

There are many types of the digital switch 50 and the digital trigger portion 41, as well as the analog switch 60 and the analog trigger portion 42. Generally, the digital switch 50 adopts a micro switch 51, and the digital trigger portion 41 adopts a pressing structure. When the user pulls the trigger key, the digital trigger portion 41 presses the micro switch 51 to generate a digital signal. While the analog switch 60 generally adopts a Hall element, and the analog trigger portion 42 adopts a magnet. When the user pulls the trigger key, the magnet approaches or moves away from the Hall element, and the Hall element detects the change in magnetic field strength and generates an analog signal accordingly. Of course, the digital switch 50 and the analog switch 60 may also adopt other structures. For example, the digital switch 50 is a light sensor, and the digital trigger portion 41 is an infrared light transmitter. When the trigger key is pulled, the infrared light emitted by the infrared light transmitter irradiates the light sensor to generate a digital signal. For another example, the analog switch 60 is a pressure sensor, and the analog trigger portion 42 is a compression spring. When the trigger key is pulled, the compression spring generates a linearly changing pressure on the pressure sensor, and the pressure sensor generates an analog signal.

The digital switch 50 and the analog switch 60 may both be connected to the movable member 20, or one may be mounted at the movable member 20 and the other may be mounted at the seat body 10, the housing 200 or the main control board 300, etc. Specifically, in some embodiments of the present application, the digital switch 50 and the analog switch 60 are both mounted at the movable member 20. In the first state, the digital switch 50 is aligned with the digital trigger portion 41, and the analog switch 60 is misaligned with the analog trigger portion 42. In the process of switching to the second state, the movable member 20 drives the digital switch 50 and the analog switch 60 to move together until the digital switch 50 is misaligned with the digital trigger portion 41, and the analog switch 60 is aligned with the analog trigger portion 42. There are many other specific implementations of the digital switch 50 and the analog switch 60, which are not listed here one by one.

The movable member 20 may be rotatably mounted at the seat body 10 or slidably mounted at the seat body 10. The magnetic positioning member 30 may position the magnetic portion 21 by magnetic attraction or magnetic repulsion. For example, in some embodiments of the present application, the movable member 20 is rotatably mounted at the seat body 10, and the movable member 20 is located at two extreme positions in a sliding direction of the movable member 20 itself in the first state and the second state respectively. In the two limit states of the movable member 20, the magnetic portion 21 is respectively in two different limit positions. The magnetic positioning member 30 includes two magnets, the two magnets are respectively located at the two limit positions of the magnetic portion 21 and are arranged to attract opposite sexes with the magnetic portion 21. In this way, in the two different states of the movable member 20, the one of the two magnets that is closer to the magnetic portion 21 has a much higher attraction force on the magnetic portion 21 than the other, so that the positioning of the movable member 20 is achieved.

In other embodiments of the present application, the movable member 20 is slidably mounted at the seat body 10, and the movable member 20 is located at two extreme positions in a sliding direction of the movable member 20 itself in the first state and the second state respectively. The magnetic positioning member 30 is located in a middle of the two extreme positions of the magnetic portion 21, and is arranged to repel each other with the same polarity as the magnetic positioning member 30. In this way, when the user slides the movable member 20, the repulsive force of the magnetic positioning member 30 acting on the movable member 20 is gradually strengthened. After the movable member 20 passes the halfway point, it quickly switches to another state under the repulsive force of the magnetic positioning member 30, the force feedback effect is optimal, and the stability of the movable member 20 is higher in any state.

There are many ways to slide the moveable member 20 on the seat body 10. For example, the moveable member 20 is provided with a slideway, and the seat body 10 is provided with a slide rail that cooperates with the slideway. In some embodiments of the present application, the moveable member 20 includes a sliding plate 22, the sliding plate 22 is provided with a sliding hole 221, the seat body 10 is slidably connected to the sliding hole 221, and the magnetic portion 21 is connected to the sliding plate 22 and is located at a side perpendicular to the extension direction of the sliding hole 221. In this solution, the force of the magnetic portion 21 acting on the sliding plate 22 is as much as possible toward the sliding hole 221, so as to avoid the problem that when the magnetic portion 21 is acted upon by the magnetic force of the magnetic positioning member 30, the magnetic portion 21 generates a large torque on the sliding plate 22, thereby affecting the sliding smoothness of the sliding plate 22.

The magnetic portion 21 may be connected to the sliding plate 22 by means of clamping, bonding, etc. In some embodiments of the present application, the sliding plate 22 includes a plate body 222 and a mounting frame 223, the plate body 222 is provided with the sliding hole 221, the mounting frame 223 is connected to an edge side of the plate body 222 in the width direction of the sliding hole 221, and the magnetic portion 21 is mounted at the mounting frame 223. The plate body 222 is aligned with an edge side of the seat body 10 close to the mounting frame 223, and the mounting frame 223 partially extends to the edge side of the seat body 10. In this way, the mounting frame 223 can not only be configured to mount the magnetic portion 21, but also can be aligned with the edge side of the seat body 10 during assembly to play a positioning role. The mounting frame 223 may be integrally formed with the plate body 222, and the overall strength is relatively high.

In some embodiments of the present application, double-body trigger keyswitch structure 100 further includes a limit screw 70, the seat body 10 is provided with an internal thread column 11 on a face facing the movable member 20, and the internal thread column 11 is slidably matched with the slide hole 221. The limit screw 70 includes a connected head 71 and a rod 72, and the rod 72 is threadedly connected to the internal thread column 11, so that the movable member 20 is limited between the head 71 and the seat body 10. Such an arrangement ensures that the movable member 20 may slide smoothly, while also providing high stability and ease of assembly.

In some embodiments of the present application, the movable member 20 includes a plate body 222 and an assembly sleeve 23, the assembly sleeve 23 is integrally formed and connected to a middle of the plate body 222, and the sliding hole 221 is formed inside the assembly sleeve 23. This may prevent the plate surface of the movable member 20 from tilting after assembly or during sliding, further improving the structural stability and the smoothness of sliding of the movable member 20.

In some embodiments, considering that some analog trigger portions 42 and analog switches 60 use magnetic induction to achieve signal triggering, in order to avoid interference between the magnetic positioning member 30 and the magnetic portion 21 with the analog trigger portion 42 and the analog switch 60. In some embodiments of the present application, the trigger key 40 is provided with an outer side surface and an inner side surface, the digital trigger portion 41 and the analog trigger portion 42 are both arranged at an interval on the inner side surface, the digital switch 50 is mounted at a side of the movable member 20 away from the magnetic portion 21 and is aligned with the digital trigger portion 41, and the analog trigger portion 42 is located at a side of the digital trigger portion 41 away from the magnetic portion 21. By increasing the distance between the magnetic portion 21 and the analog switch 60 as much as possible, reducing the interference between the two effectively, improving the response accuracy of the double-body trigger keyswitch structure 100, and enhancing the user experience.

The present application also provides a gamepad 1000, the gamepad 1000 includes a housing 200, a main control board 300 and a double-body trigger keyswitch structure 100. The housing 200 is provided with an installation cavity 210, a cavity wall of the installation cavity 210 is provided with a key hole 220, and the main control board 300 is mounted at the installation cavity 210. The seat body 10 is connected to the main control board 300, the trigger keyswitch 40 is exposed outside the key hole 220, the magnetic positioning member 30 is mounted at the main control board 300, and the digital switch 50 and the analog switch 60 are both electrically connected to the main control board 300. The housing 200 generally includes a detachable front shell 201 and a posterior shell 202 to facilitate the installation of the internal structure. The specific structure of the double-body trigger keyswitch structure 100 refers to the above embodiment. Since the gamepad 1000 adopts all the technical solutions of all the above embodiments, it at least has all the beneficial effects brought by the technical solutions of the above embodiments, which will not be repeated here.

There are more options for the positions of the digital switch 50 and the analog switch 60 in the overall structure of the gamepad 1000. The digital switch 50 and the analog switch 60 may be optionally mounted not only at the movable member 20 and the seat body 10, but also at the main control board 300 or the housing 200. In some embodiments of the present application, the digital switch 50 is mounted at the movable member 20, the analog switch 60 is integrated with the main control board 300, the housing 200 is further provided with an adjustment hole 230, the movable member 20 is provided with an adjustment rod 24, the adjustment rod 24 extends out of the adjustment hole 230 and is movably matched with the adjustment hole 230. Generally, the digital switch 50 is integrated in an interface board 52 by the micro switch 51, and is fixed to the movable member 20 through the interface board 52. Through the above scheme, when operating, the user can switch the state of the movable member 20 through the lever from the outside of the housing 200 without opening the handle housing 200, which is more convenient. In addition, when the movable member 20 is in the first state, the digital switch 50 is aligned with the digital trigger portion 41, and can form a limit on the trigger key as a whole, thereby limiting the analog trigger portion 42 from triggering the analog switch 60. After switching to the second state, the digital switch 50 is misaligned with the digital trigger part portion 41, and the trigger key may move significantly to enable the analog trigger portion 42 to trigger the analog switch 60.

In some embodiments, the adjustment rod 24 is located between the magnetic portion 21 and the sliding hole 221. In this way, when the adjustment rod 24 is moved, the movable member 20 is subjected to a positive thrust at the rod 72, and is mainly subjected to reverse resistance at the opposite sides of the adjustment rod 24. That is, the friction between the wall of the sliding hole 221 and the internal threaded column 11, along with the repulsion of the magnetic portion 21 by the magnetic positioning portion 30, are in a state of balance, resulting in a relatively small torque acting on the movable member 20, thereby avoiding the problem of the movable member 20 twisting during the sliding process, which leads to poor sliding.

The magnetic positioning member 30 may be mounted at the main control board 300 by means of clamping, bonding, etc. In some embodiments of the present application, the gamepad 1000 is provided with two double-body trigger keyswitch structures 100, the main control board 300 is provided with a mounting seat 310, the mounting seat 310 is arranged between the two seat bodies 10, and the two magnetic positioning members 30 are respectively mounted at the opposite sides of the mounting seat 310 and are arranged at an interval from the corresponding magnetic portions 21. In this way, the repulsive forces on both sides of the two magnetic positioning members 30 and the mounting seat 310 may be balanced, the strength requirements of the connection structure between the mounting seat 310 and the main control board 300 substrate are relatively low, and the overall structure is more compact.

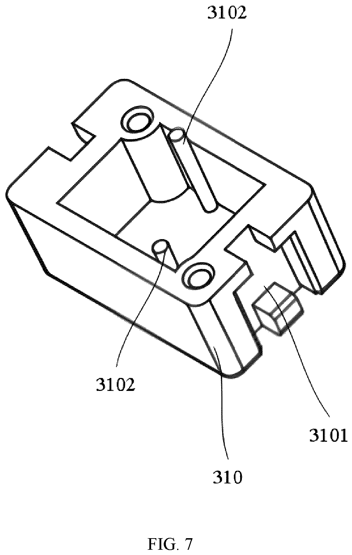

There are many specific implementations of the mounting seat 310. The magnetic positioning member 30 and the mounting seat 310, and the mounting seat 310 and the substrate of the main control board 300 may also be connected by bonding or clamping. In some embodiments of the present application, referring to FIG. 7, the mounting seat 310 is provided with a assembly grooves 3101 relative to the two components for assembling the magnetic positioning member 30. The mounting seat 310 is provided with a positioning column 3102 on a face facing the substrate of the main control board 300, so as to cooperate with the positioning hole on the main control board 300 for positioning. Such an arrangement has high reliability.

In some embodiments of the present application, a limiting column 2221 is arranged at a face of the plate body 222 facing the seat 10, the seat body 10 is correspondingly provided with a slide groove 12, and the limiting column 2221 is slidably assembled in the slide groove 12, so as to further improve the sliding stability of the movable member 20. Furthermore, there are two limiting columns 2221, which can not only guide the movable member 20 to slide in the correct direction, but also prevent the movable member 20 from rotating itself, and the sliding stability is higher.

In some embodiments of the present application, the trigger key 40 includes a face shell 43, a back shell 44, a rotating shaft 45 and a torsion spring 46. The face shell 43 is connected to the back shell 44. The analog trigger portion 42 is provided with an arm body 421. The digital trigger portion 41 and one end of the arm body 421 are both connected to a face of the back shell 44 facing away from the face shell 43. A side of the face shell 43 is provided with a articulating lug 431, the articulating lug 431 is provided with an axis hole 432, and the rotating shaft 45 passes through the axis hole 432 and is rotatably connected to the housing 200 at both ends. The torsion spring 46 is mounted at the rotating shaft 45 and abuts against the face shell 43 to achieve the reset of the trigger key 40.

The above descriptions are only embodiments of the present application, and are not intended to limit the scope of the present application. Under the inventive concept of the present application, any equivalent structural transformations made by using the contents of the description and drawings of the present application, or direct/indirect applications in other related technical fields are included in the scope of the present application.

## Claims

1. A double-body trigger keyswitch structure (100), applied to a gamepad (1000), the gamepad (1000) comprising a main control board (300), **characterized in that** the double-body trigger keyswitch structure (100) comprises:
a seat body (10);
a movable member (20) movably mounted at the seat body (10) and provided with a first state and a second state that are movably switched, wherein the movable member (20) is provided with a magnetic portion (21);
a magnetic positioning member (30) relatively fixed to the seat body (10), a magnetic force of the magnetic positioning member (30) acting on the magnetic portion (21) to limit the movable member (20) to the first state or the second state;
a trigger key (40) mounted at the seat body (10) and provided with a digital trigger portion (41) and an analog trigger portion (42);
a digital switch (50) and an analog switch (60) both configured to be electrically connected to the main control board (300), wherein at least one of the digital switch (50) and the analog switch (60) is mounted at the movable member (20); and
when the movable member (20) is in the first state and the trigger key (40) is pulled, the digital trigger portion (41) triggers the digital switch (50), and when the movable member (20) is in the second state and the trigger key (40) is pulled, the analog trigger portion (42) triggers the analog switch (60).

2. The double-body trigger keyswitch structure (100) according to claim 1, wherein the movable member (20) is slidably mounted at the seat body (10), and the movable member (20) is located at two extreme positions in a sliding direction of the movable member (20) itself in the first state and the second state respectively; and
the magnetic positioning member (30) is located in a middle of the two extreme positions of the magnetic portion (21), and is arranged to repel each other with the same polarity as the magnetic positioning member (30).

3. The double-body trigger keyswitch structure (100) according to claim 1, wherein the movable member (20) comprises a sliding plate (22), the sliding plate (22) is provided with a sliding hole (221), the seat body (10) is slidably connected to the sliding hole (221), and the magnetic portion (21) is connected to the sliding plate (22) and is located at a side perpendicular to the extension direction of the sliding hole (221).

4. The double-body trigger keyswitch structure (100) according to claim 3, wherein the sliding plate (22) comprises a plate body (222) and a mounting frame (223), the plate body (222) is provided with the sliding hole (221), the mounting frame (223) is connected to an edge side of the plate body (222) in the width direction of the sliding hole (221), and the magnetic portion (21) is mounted at the mounting frame (223); and
the plate body (222) is aligned with an edge side of the seat body (10) close to the mounting frame (223), and the mounting frame (223) partially extends to the edge side of the seat body (10).

5. The double-body trigger keyswitch structure (100) according to claim 3, wherein the double-body trigger keyswitch structure (100) further comprises a limit screw (70), the seat body (10) is provided with an internal thread column (11) on a face facing the movable member (20), and the internal thread column (11) is slidably matched with the sliding hole (221); and
the limit screw (70) comprises a connected head (71) and a rod (72), and the rod (72) is threadedly connected to the internal thread column (11), so that the movable member (20) is limited between the head (71) and the seat body (10).

6. The double-body trigger keyswitch structure (100) according to claim 5, wherein the movable member (20) comprises a plate body (222) and an assembly sleeve (23), the assembly sleeve (23) is integrally formed and connected to a middle of the plate body (222), and the sliding hole (221) is formed inside the assembly sleeve (23).

7. The double-body trigger keyswitch structure (100) according to claim 1, wherein the trigger keyswitch (40) is provided with an outer side surface and an inner side surface, the digital trigger portion (41) and the analog trigger portion (42) are both arranged at an interval on the inner side surface, the digital switch (50) is mounted at a side of the movable member (20) away from the magnetic portion (21) and is aligned with the digital trigger portion (41), and the analog trigger portion (42) is located at a side of the digital trigger portion (41) away from the magnetic portion (21).

8. A gamepad (1000), comprising a housing (200), a main control board (300) and the double-body trigger keyswitch structure (100) according to any one of claims 1 to 7, wherein:
the housing (200) is provided with an installation cavity (210), a cavity wall of the installation cavity (210) is provided with a key hole (220), and the main control board (300) is mounted at the installation cavity (210); and
the seat body (10) is connected to the main control board (300), the trigger keyswitch (40) is exposed outside the key hole (220), the magnetic positioning member (30) is mounted at the main control board (300), and the digital switch (50) and the analog switch (60) are both electrically connected to the main control board (300).

9. The gamepad (1000) according to claim 8, wherein the digital switch (50) is mounted at the movable member (20), the analog switch (60) is integrated in the main control board (300), the housing (200) is further provided with an adjustment hole (230), the movable member (20) is provided with an adjustment rod (24), and the adjustment rod (24) extends out of the adjustment hole (230) and is movably matched with the adjustment hole (230).

10. The gamepad (1000) according to claim 8, wherein the gamepad (1000) is provided with two double-body trigger keyswitch structures (100), the main control board (300) is provided with a mounting seat (310), the mounting seat (310) is arranged between the two seat bodies (10), and the two magnetic positioning members (30) are respectively mounted at opposite sides of the mounting seat (310) and are arranged at an interval from the corresponding magnetic portions (21).
